(19) **Europäisches Patentamt / European Patent Office / Office européen des brevets**

(11) **EP 3 989 094 B1**

(12) **EUROPEAN PATENT SPECIFICATION**

(45) Date of publication and mention
of the grant of the patent:
**08.11.2023 Bulletin 2023/45**

(21) Application number: **19938489.2**

(22) Date of filing: **23.07.2019**

(51) International Patent Classification (IPC):
**G06F 21/64** $^{(2013.01)}$ **G06F 21/56** $^{(2013.01)}$

(52) Cooperative Patent Classification (CPC):
**G06F 21/64**

(86) International application number:
**PCT/JP2019/028921**

(87) International publication number:
**WO 2021/014595 (28.01.2021 Gazette 2021/04)**

(54) **VERIFYING INFORMATION CREATING SYSTEM, VERIFYING INFORMATION CREATING METHOD, AND VERIFYING INFORMATION CREATING PROGRAM**

SYSTEM ZUR ERZEUGUNG VON VERIFIZIERUNGSINFORMATIONEN, VERFAHREN ZUR ERZEUGUNG VON VERIFIZIERUNGSINFORMATIONEN UND PROGRAMM ZUR ERZEUGUNG VON VERIFIZIERUNGSINFORMATIONEN

SYSTÈME DE CRÉATION D'INFORMATIONS DE VÉRIFICATION, PROCÉDÉ DE CRÉATION D'INFORMATIONS DE VÉRIFICATION ET PROGRAMME DE CRÉATION D'INFORMATIONS DE VÉRIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.04.2022 Bulletin 2022/17**

(73) Proprietor: **NIPPON TELEGRAPH AND TELEPHONE CORPORATION**
**Chiyoda-ku, Tokyo 100-8116, (JP)**

(72) Inventors:
- **KURA, Tsuneko**
  **Musashino-shi, Tokyo 180-8585 (JP)**
- **OUCHI, Seishi**
  **Musashino-shi, Tokyo 180-8585 (JP)**
- **KINOSHITA, Kazumi**
  **Musashino-shi, Tokyo 180-8585 (JP)**
- **NAKATSURU, Takeshi**
  **Musashino-shi, Tokyo 180-8585 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 855 334      JP-A- 2006 072 856**
**JP-A- 2019 008 376      JP-A- 2019 008 377**
**US-A1- 2010 062 844**

- **Nishimura, Megumi: "All techniques for package management!. Master for rpm/deb/tgz", Linux WORLD, vol. 5, no. 9, 1 September 2001 (2001-09-01), pages 107-123, XP009533105, JP**
- **Ohgaki; Yasuo: "Dangers and countermeasures of seven patterns from PC beginners to advanced servers", Linux, vol. 15, no. 11, 8 October 2013 (2013-10-08), pages 38-42, XP009533107, ISSN: 1345-0182**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a verification information creation system, a verification information creation method, and a verification information creation program.

Background Art

Conventionally, in order to verify that there is no security problem with software installed on various equipment (to verify integrity), there have been techniques for detecting any change or falsification of files related to the software (see Non-Patent Literatures 1 and 2). Here, the software is updated as a result of setting changes, application of security patches, or the like. Thus, system operators need to check integrity as appropriate in daily use as well as at the time of software installation.

Patent Literature 3 relates to systems and methods for authenticating and validating a device, in particular a gaming device.

Patent Literature 4 relates to a file management apparatus and a file management method.

Patent Literature 5 relates to a management system, an acquisition device and a management method. Patent Literature 5 is prior art pursuant to Article 54(3) EPC.

Citation List

Patent Literature

Patent Literature 1: Japanese Patent Laid-Open No. 2019-8738
Patent Literature 2: Japanese Patent Laid-Open No. 2019-8377
Patent Literature 3: US 2010/062844 A1
Patent Literature 4: JP 2019 008376 A
Patent Literature 5: EP 3 855 334 A1

Non-Patent Literature

Non-Patent Literature 1: Tripwire, found online on an Internet site at https://www.tripwire.co.jp/about/ on July 11, 2019
Non-Patent Literature 2: "Intel TXT Enhances Security in Virtual Environments," Nikkei XTECH, found online on an Internet site at https://tech.nikkeibp.co.jp/it/article/COLUMN/20071114/28 7197/ on July 11, 2019

Summary of the Invention

Technical Problem

However, in conventional techniques, the collation information (verification information) used to check for the above-mentioned integrity has a problem in that the collation information allows checks to be made for integrity only at certain time points, does not support a typical software, makes it necessary to manually set verification information, and so on. Thus, an object of the present invention is to provide means of creating verification information that solves the above problem.

Means for Solving the Problem

The present invention is defined by the independent claims, preferred embodiments are defined by the dependent claims. Further aspects are provided for facilitating the understanding of the invention. To achieve the above object, the present invention comprises: an acquisition section configured to acquire a file path and a hash value of a file to be checked using the hash value during verification of the file out of files contained in a software package by executing a predetermined command for the software package; and a verification information creation section configured to create verification information used to verify software in the software package, the verification information including the file path and the hash value of the file, the file path and the hash value being acquired by the acquisition section.

Effects of the Invention

The present invention can provide means of creating verification information.

Brief Description of Drawings

[Fig. 1] Fig. 1 is a diagram showing a configuration example of a verification information creation system.
[Fig. 2] Fig. 2 is a diagram showing an example of a verification information list.
[Fig. 3] Fig. 3 is a diagram showing an example of a signed verification information list.
[Fig. 4] Fig. 4 is a flowchart showing exemplary processing procedures of a verification information creation apparatus shown in Fig. 1.
[Fig. 5] Fig. 5 is a flowchart showing an exemplary verification process using a hash value contained in collation information.
[Fig. 6] Fig. 6 is a flowchart showing an exemplary verification process for addition of an unnecessary file, where the verification process uses collation information.

[Fig. 7] Fig. 7 is a flowchart showing an exemplary verification process for deletion of a mandatory file, where the verification process uses collation information.

[Fig. 8] Fig. 8 is a flowchart showing an exemplary access-source verification process that uses collation information.

[Fig. 9] Fig. 9 is a diagram showing an example of a computer that executes verification information creation program.

[Fig. 10] Fig. 10 is a diagram showing an example of a collation information list.

Description of Embodiment

Mode for carrying out the present invention (embodiment) will be described below with reference to the accompanying drawings. The present invention is not limited to the embodiment described below. Note that verification information described below serves as a basis for verification of whether or not files related to software installed on equipment have been changed or falsified and verification information modified to suit equipment that verifies whether or not files have actually been changed or falsified is defined as collation information.

[Outline]

A verification information creation apparatus (verification information creation system) according to the present embodiment creates verification information about software installed, for example, on a verification apparatus, and thus uses analysis results on information contained in the software package of the software.

For example, Linux (registered trademark) has program distribution formats such as an rpm package and a deb package. With these packages, installation directories have been specified such that the user can install the software by simply executing a command.

Note that the rpm package is a system developed by Red Hat Inc. and used to manage software packages. The deb packages, examples of which include Debian and Ubuntu, are binary packages used by Linux.

For example, the rpm package can acquire various information by executing rpm commands as shown below after settings are completed.

[Math. 1]

```
# rpm -q --qf
```

" [% {name}, % {filenames}, % {filemodes: octal}, % {fileflags: : fflags}, % {f iledigests},%{fileverifyflags:hex}\n]"

name package name
filenames names of files included in the package

filemodes modes of files (file types + permission)

file types d: directory / c: character device / s: socket / -: file
permission r: file or directory is readable / w: file or directory is writable / x: file is executable

fileflags whether the file is a document, or a config file and a flagged file
filedigests hash value (MD5)
fileverifyflags numeric values of verification flags for respective files

That is, by executing the rpm command, it is possible to acquire the package name; the names of files included in the package; file modes; file types (d: directory / c: character device / s: socket / -: file); permission (r: file or directory is readable / w: file or directory is writable / x: file is executable); whether the file is a document, or a config file and a flagged file; hash value (MD5); and numeric values of verification flags for respective files and the like from the rpm package.

By executing the rpm command, for example, with respect to an rpm package, the verification information creation apparatus can acquire each piece of the information described above.

Here, of the files contained in the package, it can be considered that the files subject to hash checking at the time of file verification are binary files that do not undergo file rewriting. Thus, the verification information creation apparatus uses, as verification information, a file that gives a value of 1 when the value (0x********) of %{fileverifyflags:hex} described above is logically ANDed with 0x00000001.

Also, of the files contained in the package, it can be considered that no change will be made to a write-protected config file once settings are made. Thus, with reference to the value of %{fileflags}, the verification information creation apparatus also uses a write-protected config file as verification information.

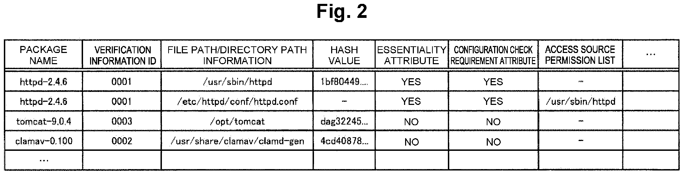

By performing the above process, the verification information creation apparatus creates, for example, the verification information shown in Fig. 2. That is, the verification information creation apparatus creates verification information including the package name and package character strings (the package name of the software package plus identification information about the equipment on which the software package is to be installed) of the software package for which verification information is to be created, information on the file path or directory path of the file to be verified on the given equipment, the hash value and essentiality attribute of the file, and the like, for example, shown in Fig. 2.

Note that in the case of a deb package the file path and hash value (MD5) of each file included in each package can be acquired using the following command after installation. Thus, the verification information creation apparatus can use information acquired by the following command as verification information.

# dlocate --md5sum package name

In this way, the verification information creation apparatus analyzes a software package and creates verification information using information about a file unlikely to be changed in daily use out of the files contained in the software package. Consequently, even if any file related to the software is changed in daily use after the software is installed, the verification apparatus that uses the verification information in verifying the software installed on the verification apparatus itself can check (verify) the integrity of the software.

[Configuration]

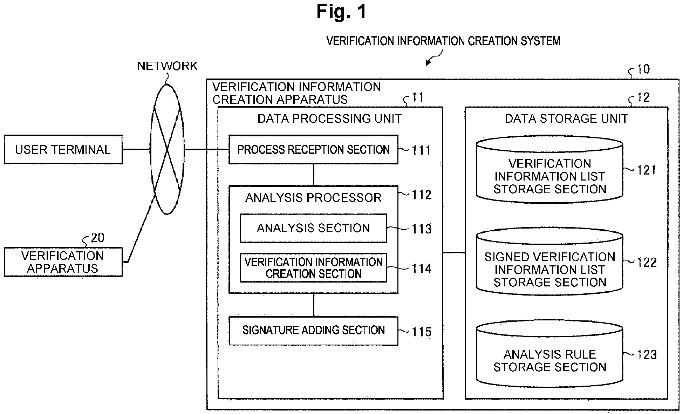

Next, a configuration example of a verification information creation system will be described using Fig. 1. The verification information creation system includes, for example, a verification information creation apparatus 10 configured to create verification information about software in a software package and a verification apparatus 20 configured to perform a verification process of software installed on the verification apparatus 20 itself, using the verification information.

The verification information creation apparatus 10 includes a data processing unit 11 and a data storage unit 12. The verification information creation apparatus 10 is connected to a user terminal via a network such as the Internet.

The data processing unit 11 includes a process reception section 111, an analysis processor 112, and a signature adding section 115. The data storage unit 12 includes a verification information list storage section 121, a signed verification information list storage section 122, and an analysis rule storage section 123.

First, components of the data processing unit 11 will be described. The process reception section 111 receives a request to create verification information about software in a software package from the user terminal and returns results thereon.

The analysis processor 112 analyzes the software package and thereby creates verification information. The analysis processor 112 includes an analysis section (acquisition section) 113 and a verification information creation section 114.

The analysis section 113 reads rules for analyzing the software package for which verification information is to be created, out of the analysis rule storage section 123. Then, following the read rules, the analysis section 113 acquires information about files unlikely to be changed in daily use from the files contained in the software package.

For example, by executing a predetermined command, the analysis section 113 acquires the file path and the hash value of the file (e.g., a binary file) to be checked using the hash value during verification as well as the file path of a non-rewritable config file, out of the files contained in the software package. Also, the analysis section 113 acquires the package name and verification information ID (e.g., serial number) of the software package.

Based on information acquired as a result of analysis conducted on the software package by the analysis section 113, the verification information creation section 114 creates verification information about the software in the software package. For example, based on information acquired as a result of analysis conducted on the software package by the analysis section 113, the verification information creation section 114 creates verification information (see Fig. 2) indicating the package name and verification information ID of the software package, information on the file path or directory path of the file to be verified, the hash value and essentiality attribute of the file, and the like. Subsequently, the verification information creation section 114 stores the created verification information in the verification information list storage section 121 and returns a notice to the user terminal, informing the user terminal that verification information has been created.

Note that when instructions to read verification information are received via the user terminal, the process reception section 111 reads the verification information specified by the instructions out of the verification information list storage section 121 and transmits the verification information to the user terminal. Subsequently, upon receiving a modification of the verification information from the user terminal, the process reception section 111 stores verification information that reflects the modification in the verification information list storage section 121.

For example, if the process reception section 111 is instructed by the user terminal to add an access source (executable file path of a program having access permission) permitted by an access source permission list (see Fig. 2) in the verification information to the verification information, the process reception section 111 stores the verification information modified based on the instructions, in the verification information list storage section 121.

Note that the process reception section 111 may store verification information transmitted from an external apparatus (e.g., the user terminal) in the verification information list storage section 121.

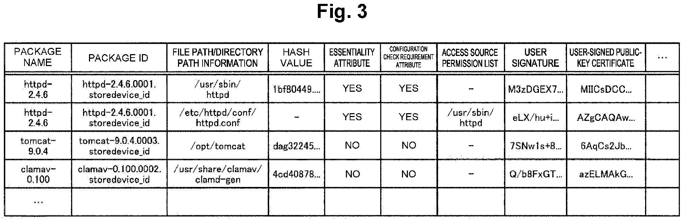

The signature adding section 115 adds a public-key certificate signed by the user to the verification information. For example, when the signature adding section 115 receives a request to add a signature to verification information, from the user terminal, the process reception section 111 selects appropriate verification information from the verification information list storage section 121 and passes the verification information to the signature adding section 115. Then, the signature adding section 115 replaces the verification information ID with a package ID (the package name plus the verification information ID plus identification information about the equipment in which the verification information is to be stored), adds a user signature of the equipment in which the verification information is to be stored and the public-key certificate signed by the user to the verification information, and stores the resulting verification information (see Fig. 3) in the signed verification information list storage section 122.

Next, components of the data storage unit 12 will be described. The verification information list storage section 121 of the data storage unit 12 stores a list of verification information (a verification information list). For example, as shown in Fig. 2, the verification information includes the package name and package character strings of the software package, the file path or directory path information about the file to be verified, the hash value of the file, an essentiality attribute, and the like. Also, as shown in Fig. 2, the verification information may include a configuration check requirement attribute, an access source permission list, and the like.

The essentiality attribute provides attribute information as to whether the file indicated by file path/directory path information of the verification information is a required file of the equipment on which the software package is to be installed.

Also, the configuration check requirement attribute provides attribute information as to whether the file indicated by file path/directory path information of the verification information is marked for configuration checking.

Furthermore, the access source permission list provides information that shows an executable file path of a program having access permission, to the file indicated by the file path/directory path information of the verification information.

Information about the essentiality attribute, the configuration check requirement attribute, and the access source permission list is entered, for example, via the user terminal.

The signed verification information list storage section 122 stores a list of signed verification information (see Fig. 3). The list of signed verification information is a list of verification information to which the user signature of the equipment in which the verification information is to be stored and a public-key certificate signed by the user have been added. For example, the list of signed verification information shown in Fig. 3 is created by replacing the verification information ID with a package ID made up of the package name plus the verification information ID plus identification information about the equipment in which the verification information is to be stored and adding a user signature of the equipment in which the verification information is to be stored and the public-key certificate signed by the user to each piece of the verification information shown in Fig. 2.

For each software package, the analysis rule storage section 123 stores information (analysis rules) showing an analysis method used to create verification information about the software in the software package. For example, the analysis rules execute an rpm command for an rpm package, thereby acquire information about binary files that undergo a hash check at the time of file verification, and acquire information about a write-protected config file.

[Processing procedures]

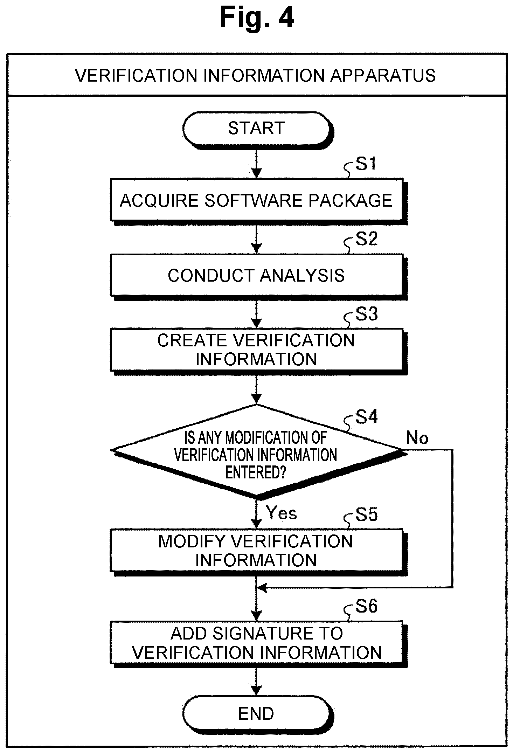

Next, exemplary processing procedures of the verification information creation apparatus 10 will be described using Fig. 4. For example, when an input is received from the user terminal or the like, indicating that verification information about software in a software package will be created, the verification information creation apparatus 10 performs the following process.

First, the analysis section 113 of the verification information creation apparatus 10 acquires a software package for which verification information is to be created (S1) and conducts analysis on the software package based on analysis rules for the software package (S2). Subsequently, the verification information creation section 114 creates verification information about the software package based on analysis results on the software package produced by the analysis section 113 (S3). Then, the verification information creation section 114 stores the verification information created in S3 in the verification information list storage section 121.

Subsequently, if the process reception section 111 receives as input a modification of the verification information from the user terminal or the like (Yes in S4), the process reception section 111 stores verification information that reflects the modification in the verification information list storage section 121 (S5: modify verification information). Subsequently, the signature adding section 115 adds a user signature and a user-signed public-key certificate to the verification information to be stored in the verification information list storage section 121 and stores the verification information in the signed verification information list storage section 122 (S6: add signature to verification information). On the other hand, if the process reception section 111 does not receive as input a modification of the verification information (No in S4), the process reception section 111 goes to S6 by skipping the process of S5.

This allows the verification information creation apparatus 10 to create verification information about the software in the software package and add a signature to the verification information.

[Example of verification process]

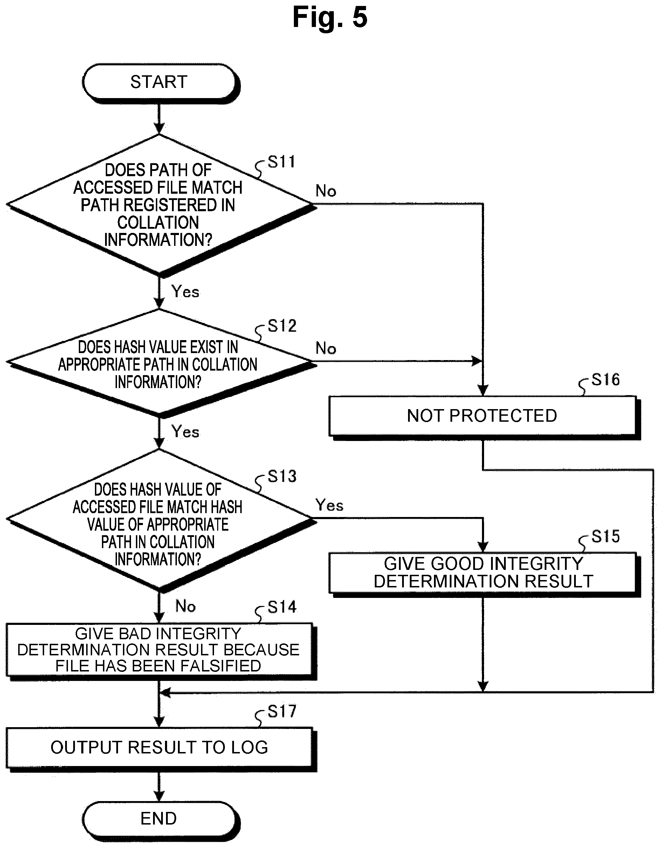

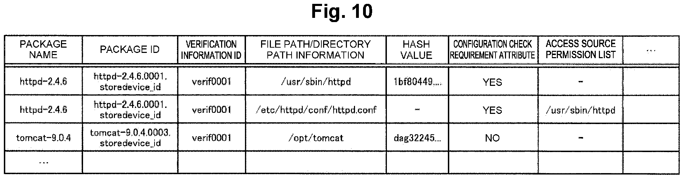

Next, an example of verification process using verification information created by the verification information creation apparatus 10 will be described. For example, the verification apparatus 20 shown in Fig. 1 acquires verification information about the verification apparatus 20 itself from the verification information creation apparatus 10 and performs the verification process shown in Figs. 5 to 8. First, an example of the verification process using a hash value of verification information will be described with reference to Fig. 5. The verification information created by the verification information creation apparatus 10 is stored in the verification apparatus 20. Based on the user signature and the user-signed public-key certificate, the verification apparatus 20 makes sure that the received verification information has not been falsified. The verification apparatus 20 compares the software installed on the verification apparatus 20 with the verification information and stores the information that fits the verification apparatus 20 as collation information. This information is used later to check files for any change or falsification. For example, in the signed verification information list shown in Fig. 3, the entries in the essentiality attribute of software packages tomcat-9.0.4 and clamav-0.100 are "NO." Here, if it is assumed that tomcat-9.0.4 has been installed, but clamav-0.100 has not been installed, on the verification apparatus 20, information shown in Fig. 10 is saved as collation information. That is, the verification apparatus 20 stores information of the signed verification information list as collation information by removing verification information about software files actually not installed on the verification apparatus 20.

[Verification process using hash value]

First, upon detecting access to a file in the verification apparatus 20, the verification apparatus 20 determines whether the path of the accessed file matches any path registered in the verification information (S11). Here, if the verification apparatus 20 determines that the path of the accessed file matches any path registered in the collation information (Yes in S11) and that a hash value exists in the appropriate path in the collation information (Yes in S12), the verification apparatus 20 determines whether the hash value of the accessed file matches the hash value of the appropriate path in the collation information (S13).

If the verification apparatus 20 determines in S13 that the hash value of the accessed file does not match the hash value of the appropriate path in the collation information (No in S13), this means that the file has been falsified, and thus the verification apparatus 20 gives a bad integrity determination result (S14). Then, the verification apparatus 20 outputs the result of determination to a log (S17).

On the other hand, if the verification apparatus 20 determines that the hash value of the accessed file matches the hash value of the appropriate path in the collation information (Yes in S13), the verification apparatus 20 gives a good integrity determination result (not falsified) to the file (S15). Then, the verification apparatus 20 outputs the result of determination to the log (S17).

Note that if the verification apparatus 20 determines in S11 that the path of the accessed file does not match any path registered in the collation information (No in S11), the verification apparatus 20 determines that the file is not protected (S16) and outputs the result of determination to the log (S17). Also, even if the verification apparatus 20 determines that a hash value does not exist for the appropriate path in the collation information (No in S12), the verification apparatus 20 determines that the file is not protected (S16) and outputs the result of determination to the log (S17).

[Verification process for addition of unnecessary file]

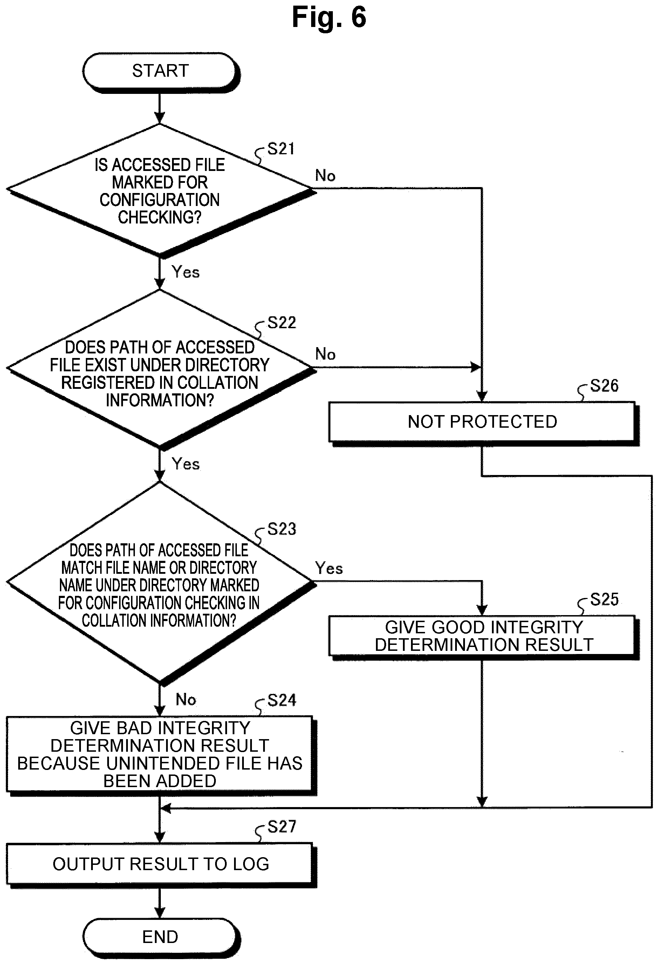

Next, an exemplary verification process for addition of an unnecessary file will be described using Fig. 6. First, upon detecting access to a file in the verification apparatus 20, the verification apparatus 20 determines whether the accessed file is marked for configuration checking in the collation information (S21). Here, if the verification apparatus 20 determines that the accessed file is marked for configuration checking in the collation information (Yes in S21), the verification apparatus 20 determines whether the path of the accessed file exists under a directory registered in the collation information (S22).

If the verification apparatus 20 determines in S22 that the path of the accessed file exists under a directory registered in the collation information (Yes in S22), the verification process goes to S23.

If the verification apparatus 20 determines in S23 that the path of the accessed file does not match any file name or directory name just under the directory of the collation information (No in S23), because an unintended file has been added, the verification apparatus 20 gives a bad integrity determination result (S24). Then, the verification apparatus 20 outputs the result of determination to the log (S27).

On the other hand, if the verification apparatus 20 determines that the path of the accessed file match any file name or directory name just under the directory registered in the collation information and marked for configuration checking (Yes in S23), the verification apparatus 20 gives a good integrity determination result (no unnecessary file has been added) to the file (S25). Then, the verification apparatus 20 outputs the result of determination to the log (S27).

Note that in S21, if the file, to which access is detected by the verification apparatus 20 is not marked for configuration checking in the collation information (No in S21), the verification apparatus 20 determines that the file is not protected (S26) and outputs the result of determination to the log (S27) .

Also, if the verification apparatus 20 determines in S22 that the path of the accessed file does not exist under the directory registered in the collation information and marked for configuration checking (No in S22), the verification apparatus 20 determines that the file is not protected (S26) and outputs the result of determination to the log (S27).

[Verification process for deletion of a mandatory file]

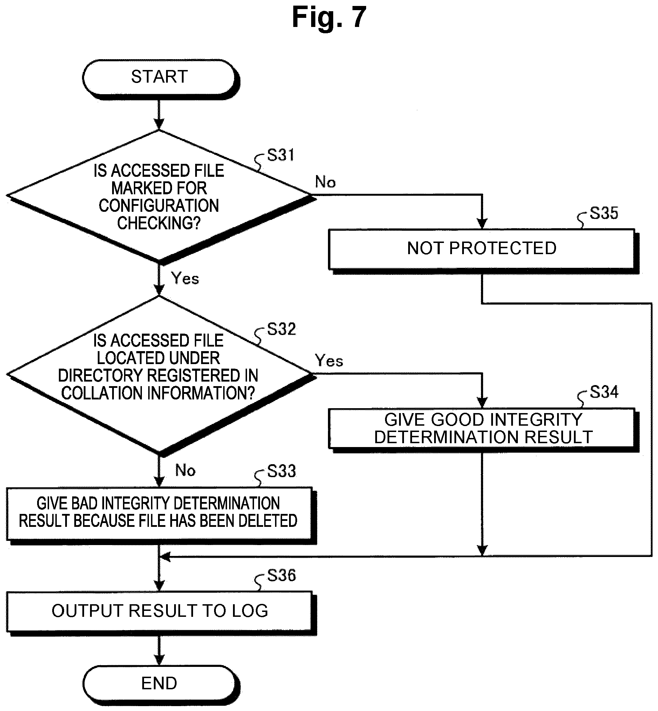

Next, an exemplary verification process for deletion of a mandatory file will be described using Fig. 7. First, upon detecting access to a file in the verification apparatus 20, if the accessed file is marked for configuration checking in the collation information (Yes in S31), the verification apparatus 20 determines whether the accessed file is located under a directory registered in the collation information (S32).

If the verification apparatus 20 determines in S32 that the accessed file is located under a directory registered in the collation information (Yes in S32), the verification apparatus 20 gives a good integrity determination result (the file has not been deleted) to the file (S34). Then, the verification apparatus 20 outputs the result of determination to the log (S36).

On the other hand, if the verification apparatus 20 determines that the accessed file is not located under a directory registered in the collation information (No in S32), the verification apparatus 20 gives a bad integrity determination result because the file has been deleted (S33). Then, the verification apparatus 20 outputs the result of determination to the log (S36).

Note that in S31, even if the path of the file, to which access is detected by the verification apparatus 20 is not marked for configuration checking (No in S31), the verification apparatus 20 determines that the file is not protected (S35) and outputs the result of determination to the log (S36).

[Access-source verification process]

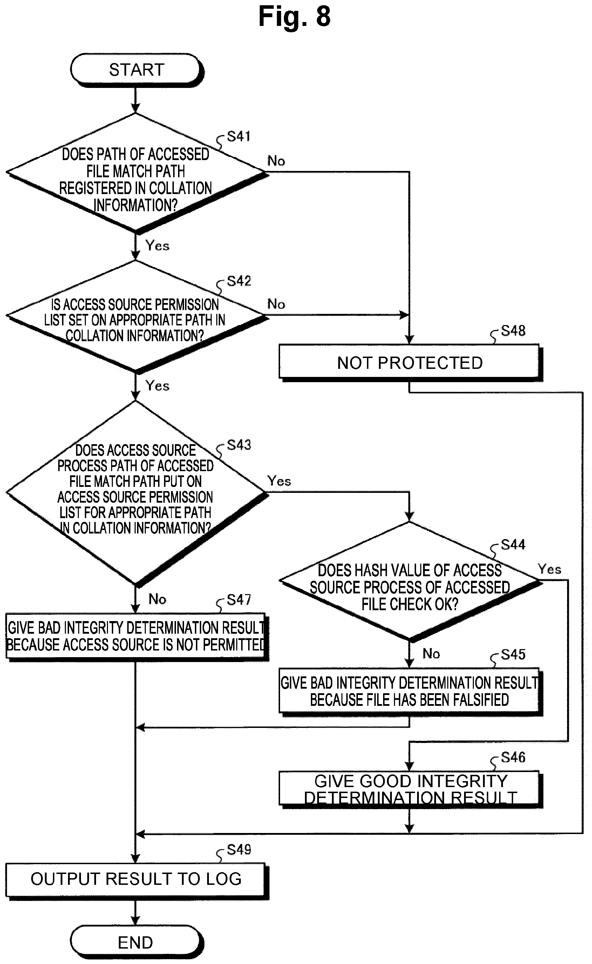

Next, an exemplary access-source verification process will be described using Fig. 8. First, upon detecting access to a file in the verification apparatus 20, if the verification apparatus 20 determines that the path of the accessed file matches any path registered in the collation information (Yes in S41), the verification apparatus 20 determines whether an access source permission list is set on the appropriate path in the collation information (S42).

If the verification apparatus 20 determines in S42 that an access source permission list for the accessed file is set on the appropriate path in the collation information (Yes in S42), the verification apparatus 20 determines whether an access source process path of the accessed file matches a path put on the access source permission list for the appropriate path in the collation information (S43).

If the verification apparatus 20 determines in S43 that the access source process path of the accessed file does not match the path put on the access source permission list for the appropriate path in the collation information (No in S43), the verification apparatus 20 gives a bad integrity determination result because the access source is not permitted (S47). Then, the verification apparatus 20 outputs the result of determination to the log (S49).

On the other hand, if the verification apparatus 20 determines in S43 that the access source process path of the accessed file matches the path put on the access source permission list for the appropriate path in the collation information (Yes in S43), the verification apparatus 20 checks the hash value of the access source process of the accessed file. Then, if the hash value of the access source process of the file, to which access is detected by the verification apparatus 20 does not check OK (No in S44), the verification apparatus 20 gives a bad integrity determination result because the file has been falsified (S45). Then, the verification apparatus 20 outputs the result of determination to the log (S49).

On the other hand, if the hash value of the access source process of the file, to which access is detected by the verification apparatus 20 checks OK in S44 (Yes in S44), the verification apparatus 20 gives a good integrity determination result to the file (S46). Then, the verification apparatus 20 outputs the result of determination to the log (S49).

Note that in S41, if the file, to which access is detected by the verification apparatus 20 does not match any path registered in the collation information (No in S41), the verification apparatus 20 determines that the file is not protected (S48) and outputs the result of determination to the log (S49) .

Also, even if the verification apparatus 20 determines in S42 that an access source permission list for the accessed file is not set on the appropriate path in the collation information (No in S42), the verification apparatus 20 determines that the file is not protected (S48) and outputs the result of determination to the log (S49).

This allows the verification apparatus 20 to perform various verification processes using the collation information modified to suit the software files installed on the verification apparatus 20, based on the verification information created by the verification information creation apparatus 10.

Note that the verification processes may be performed, for example, by the verification information creation apparatus 10 described above.

[Program]

Also, a program that implements functions of the verification information creation apparatus 10 described according to the embodiments can be implemented by being installed on a desired information processing apparatus (computer). For example, by being caused to execute the above program provided as packaged software or online software, the information processing apparatus can be made to function as the verification information creation apparatus 10. What is referred to as information processing apparatus herein may be a desktop computer, a laptop personal computer, a rack-mounted server computer, or the like. Besides, mobile communications terminals such as a smartphone, a cellphone, and a PHS (Personal Handyphone System) as well as a PDA (Personal Digital Assistant) are included in the category of the information processing apparatus. Also, the verification information creation apparatus 10 may be implemented on a cloud server.

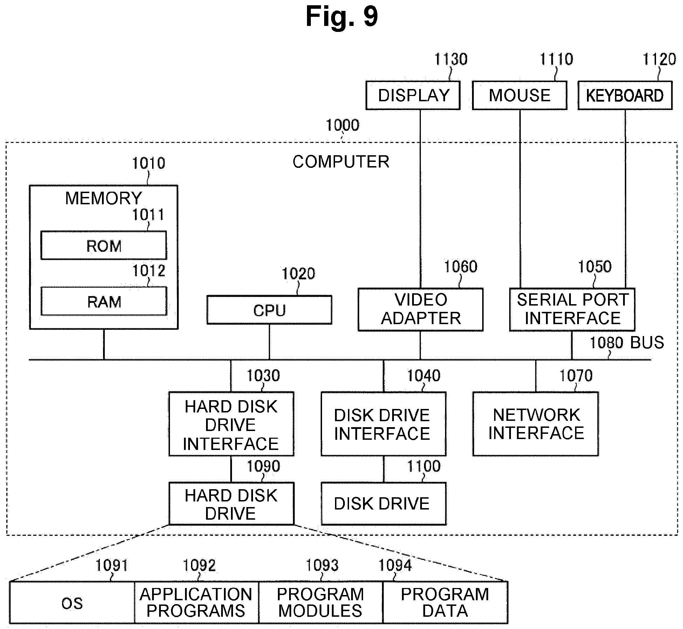

An example of a computer that executes the above program (verification information creation program) will be described using Fig. 9. As shown in Fig. 9, a computer 1000 includes, for example, a memory 1010, a CPU 1020, a hard disk drive interface 1030, a disk drive interface 1040, a serial port interface 1050, a video adapter 1060, and a network interface 1070. These components are interconnected via a bus 1080.

The memory 1010 includes a ROM (Read Only Memory) 1011 and a RAM (Random Access Memory) 1012. The ROM 1011 stores, for example, a boot program such as a BIOS (Basic Input Output System). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected, for example, with a mouse 1110 and a keyboard 1120. The video adapter 1060 is connected, for example, with a display 1130.

Here, as shown in Fig. 9, the hard disk drive 1090 stores, for example, an OS 1091, application programs 1092, program modules 1093, and program data 1094. The data storage unit described in the above embodiments is provided, for example, in the hard disk drive 1090 or the memory 1010.

Then, the CPU 1020 loads the program modules 1093 or the program data 1094 into R_AM 1012 as required from the hard disk drive 1090 and carries out the above procedures.

Note that the program modules 1093 and program data 1094 related to the verification information creation program may not only be stored in the hard disk drive 1090, but also be stored, for example, in a removable storage medium and be read by the CPU 1020 via the disk drive 1100 or the like. Alternatively, the program modules 1093 and program data 1094 related to the verification information creation program may be stored in another computer connected via a network such as a LAN or a WAN (Wide Area Network), and be read by the CPU 1020 via the network interface 1070.

Reference Signs List

10  Verification information creation apparatus
20  Verification apparatus
11  Data processing unit
12  Data storage unit
111  Process reception section
112  Analysis processor
113  Analysis section

114  Verification information creation section
115  Signature adding section
121  Verification information list storage section
122  Signed verification information list storage section
123  Dynamic analysis rule storage section

**Claims**

1. A verification information creation system comprising:

   an acquisition section (113) configured to acquire a file path and a hash value of a file to be checked using the hash value during verification of the file out of files contained in a software package by executing a predetermined command for the software package;
   a verification information creation section (114) configured to create verification information used to verify software in the software package, the verification information including the file path and the hash value of the file, the file path and the hash value being acquired by the acquisition section (113); and
   a verification apparatus (20) configured to create collation information by deleting information about a software file not installed on the verification apparatus (20) itself out of information about files indicated by the verification information, and determine whether a file on a file path indicated by the collation information has been falsified when access to the file is detected on the verification apparatus(20), where the verification apparatus (20) makes the determination using a hash value of the file as indicated by the collation information and a hash value of the accessed file.

2. The verification information creation system according to claim 1, wherein
   the acquisition section (113) further acquires a file path of a non-rewritable config file and a hash value of the config file out of the files contained in the software package.

3. The verification information creation system according to claim 1, further comprising
   a signature adding section (115) configured to add a user signature of a user of equipment in which the verification information is stored and a public-key certificate of the user to the verification information.

4. The verification information creation system according to claim 1, further comprising
   a verification apparatus (20) configured to create collation information by deleting information about a software file not installed on the verification apparatus (20) itself out of information about files indicated by the verification information, and determine that an unintended file has been added to the verification apparatus (20) when access to any file is detected on the verification apparatus (20) and the accessed file is located in or just under a directory specified by a file path indicated by the collation information.

5.  A verification information creation method performed by a verification information creation system, the method comprising the steps of:

acquiring a file path of a file to be checked using a hash value during verification of the file out of files contained in a software package by executing a predetermined command for the software package;
creating verification information used to verify software in the software package, the verification information including the acquired file path and the hash value of the file; and
creating collation information by deleting information about a software file not installed itself out of information about files indicated by the verification information, and determine whether a file on a file path indicated by the collation information has been falsified when access to the file is detected, where the determination is made using a hash value of the file as indicated by the collation information and a hash value of the accessed file.

6.  A verification information creation program that makes a computer execute the steps of:

acquiring a file path of a file to be checked using a hash value during verification of the file out of files contained in a software package by executing a predetermined command for the software package;
creating verification information used to verify software in the software package, the verification information including the acquired file path and the hash value of the file; and
creating collation information by deleting information about a software file not installed itself out of information about files indicated by the verification information, and determine whether a file on a file path indicated by the collation information has been falsified when access to the file is detected, where the determination is made using a hash value of the file as indicated by the collation information and a hash value of the accessed file.

**Patentansprüche**

1.  Verifikationsinformationserzeugungssystem, umfassend:

einen Erfassungsabschnitt (113), der so konfiguriert ist, dass er einen Dateipfad und einen Hashwert einer Datei erfasst, die unter Verwendung des Hashwerts während der Verifizierung der Datei aus den in einem Softwarepaket enthaltenen Dateien überprüft werden soll, indem ein vorbestimmter Befehl für das Softwarepaket ausgeführt wird;
einen Verifikationsinformationserzeugungsabschnitt (114), der so konfiguriert ist, dass er eine Verifikationsinformation erzeugt, die verwendet wird, um Software in dem Softwarepaket zu verifizieren, wobei die Verifikationsinformation den Dateipfad und den Hashwert der Datei einschließt, wobei der Dateipfad und der Hashwert durch den Erfassungsabschnitt (113) erfasst werden; und
eine Verifikationsvorrichtung (20), die so konfiguriert ist, dass sie eine Vergleichsinformation erzeugt, indem sie eine Information über eine Softwaredatei, die nicht auf der Verifikationsvorrichtung (20) selbst installiert ist, aus Informationen über Dateien, die durch die Verifikationsinformation angezeigt werden, löscht, und bestimmt, ob eine Datei auf einem Dateipfad, der durch die Vergleichsinformation angezeigt wird, gefälscht wurde, wenn ein Zugriff auf die Datei auf der Verifikationsvorrichtung (20) erkannt wird, wobei die Verifikationsvorrichtung (20) die Bestimmung unter Verwendung eines Hashwerts der Datei, wie durch die Vergleichsinformation angezeigt, und eines Hashwerts der Datei, auf die zugegriffen wird, vornimmt.

2.  Verifikationsinformationserzeugungssystem nach Anspruch 1, wobei der Erfassungsabschnitt (113) weiter einen Dateipfad einer nicht wiederbeschreibbaren Konfigurationsdatei und einen Hashwert der Konfigurationsdatei aus den in dem Softwarepaket enthaltenen Dateien erfasst.

3.  Verifikationsinformationserzeugungssystem nach Anspruch 1, weiter umfassend einen Signaturhinzufügungsabschnitt (115), der so konfiguriert ist, dass er eine Benutzersignatur eines Benutzers eines Geräts, in dem die Verifikationsinformation gespeichert ist, und ein Zertifikat mit öffentlichem Schlüssel des Benutzers zu der Verifikationsinformation hinzufügt.

4.  Verifikationsinformationserzeugungssystem nach Anspruch 1, weiter umfassend

eine Verifikationsvorrichtung (20), die so konfiguriert ist, dass sie eine Vergleichsinformation erzeugt, indem sie eine Information über eine Softwaredatei, die nicht auf der Verifikationsvorrichtung (20) selbst installiert ist, aus einer Information über Dateien, die durch die Verifikationsinformation angezeigt werden, löscht und bestimmt, dass eine unbeabsichtigte Datei zu der Verifikationsvorrichtung (20) hinzugefügt wurde, wenn ein Zugriff auf eine beliebige Datei auf der Verifikationsvorrichtung (20) erkannt wird und sich die Datei, auf die zugegriffen wird, in oder direkt unter einem Verzeichnis befindet, das durch einen Dateipfad angegeben wird, der durch die Vergleichsinformation angezeigt wird.

**5.** Verifikationsinformationserzeugungsverfahren, das von einem Verifikationsinformationserzeugungssystem durchgeführt wird, wobei das Verfahren die Schritte umfasst von:

Erfassen eines Dateipfades einer Datei, die überprüft werden soll, unter Verwendung eines Hashwertes während der Verifikation der Datei aus den in einem Softwarepaket enthaltenen Dateien durch Ausführen eines vorbestimmten Befehls für das Softwarepaket;
Erzeugen von einer Verifikationsinformation, die zum Verifizieren von Software in dem Softwarepaket verwendet wird, wobei die Verifikationsinformation den erfassten Dateipfad und den Hashwert der Datei einschließt; und
Erzeugen von einer Vergleichsinformation durch Löschen von einer Information über eine Softwaredatei, die selbst nicht installiert ist, aus Informationen über Dateien, die durch die Verifikationsinformation angezeigt werden, und Bestimmen, ob eine Datei auf einem Dateipfad, der durch die Vergleichsinformation angezeigt wird, gefälscht wurde, wenn ein Zugriff auf die Datei erkannt wird, wobei die Bestimmung unter Verwendung eines Hashwerts der Datei, wie durch die Vergleichsinformation angezeigt, und eines Hashwerts der Datei, auf die zugegriffen wird, vorgenommen wird.

**6.** Verifikationsinformationserzeugungsprogramm, das einen Computer veranlasst, die Schritte auszuführen von:

Erfassen eines Dateipfades einer Datei, die überprüft werden soll, unter Verwendung eines Hashwertes während der Verifikation der Datei aus den in einem Softwarepaket enthaltenen Dateien durch Ausführen eines vorbestimmten Befehls für das Softwarepaket;
Erzeugen von einer Verifikationsinformation, die zum Verifizieren von Software in dem Softwarepaket verwendet wird, wobei die Verifikationsinformation den erfassten Dateipfad und den Hashwert der Datei einschließt; und
Erzeugen von einer Vergleichsinformation durch Löschen von einer Information über eine Softwaredatei, die selbst nicht installiert ist, aus Informationen über Dateien, die durch die Verifikationsinformation angezeigt werden, und Bestimmen, ob eine Datei auf einem Dateipfad, der durch die Vergleichsinformation angezeigt wird, gefälscht wurde, wenn ein Zugriff auf die Datei erkannt wird, wobei die Bestimmung unter Verwendung eines Hashwerts der Datei, wie durch die Vergleichsinformation angezeigt, und eines Hashwerts der Datei, auf die zugegriffen wird, vorgenommen wird.

## Revendications

**1.** Système de création d'informations de vérification comprenant :

une section d'acquisition (113) configurée de manière à acquérir un chemin de fichier ainsi qu'une valeur de hachage d'un fichier à vérifier en utilisant la valeur de hachage pendant une vérification du fichier parmi des fichiers contenus dans un progiciel en exécutant une commande prédéterminée pour le progiciel ;
une section (114) de création d'informations de vérification configurée de manière à créer des informations de vérification utilisées pour vérifier le logiciel dans le progiciel, les informations de vérification incluant le chemin d'accès au fichier ainsi que la valeur de hachage du fichier, le chemin de fichier et la valeur de hachage étant acquis par la section d'acquisition (113) ; et
un dispositif de vérification (20) configuré de manière à créer des informations de collationnement en effaçant les informations relatives à un fichier logiciel qui n'est pas installé sur le dispositif de vérification (20) lui-même parmi les informations relatives à des fichiers indiqués par les informations de vérification, et à déterminer si un fichier sur un chemin de fichier indiqué par les informations de collationnement a été falsifié lorsqu'un accès au fichier est détecté sur le dispositif de vérification (20), le dispositif de vérification (20) exécutant la détermination en utilisant une valeur de hachage du fichier indiquée par les informations de collationnement ainsi qu'une valeur de hachage du fichier auquel un accès a été fait.

**2.** Système de création d'informations de vérification selon la revendication 1, dans lequel
la section d'acquisition (113) acquiert en outre un chemin de fichier d'un fichier de configuration non réinscriptible ainsi qu'une valeur de hachage du fichier de configuration parmi les fichiers contenus dans le progiciel.

3. Système de création d'informations de vérification selon la revendication 1, comprenant en outre une section d'ajout de signature (115) configurée de manière à ajouter aux informations de vérification une signature d'utilisateur d'un utilisateur d'un équipement dans lequel les informations de vérification sont stockées ainsi qu'un certificat de clé publique de l'utilisateur.

4. Système de création d'informations de vérification selon la revendication 1, comprenant en outre un dispositif de vérification (20) configuré de manière à créer des informations de collationnement en effaçant les informations relatives à un fichier logiciel qui n'est pas installé sur le dispositif de vérification (20) lui-même parmi les informations relatives à des fichiers indiqués par les informations de vérification, et à déterminer qu'un fichier inattendu a été ajouté au dispositif de vérification (20) lorsqu'un accès à n'importe quel fichier est détecté sur le dispositif de vérification (20) et que le fichier auquel il a été accédé est situé dans ou juste en dessous d'un répertoire spécifié par un chemin de fichier indiqué par les informations de collationnement.

5. Procédé de création d'informations de vérification exécuté par un système de création d'informations de vérification, le procédé comprenant les étapes suivantes :

acquérir un chemin de fichier d'un fichier à vérifier en utilisant une valeur de hachage pendant une vérification du fichier parmi les fichiers contenus dans un progiciel en exécutant une commande prédéterminée pour le progiciel ;
créer des informations de vérification utilisées pour vérifier un logiciel dans le progiciel, les informations de vérification incluant le chemin de fichier acquis ainsi que la valeur de hachage du fichier ; et
créer des informations de collationnement en effaçant les informations relatives à un fichier logiciel qui n'est pas installé lui-même parmi les informations relatives à des fichiers indiqués par les informations de vérification, et déterminer si un fichier sur un chemin de fichier indiqué par les informations de collationnement a été falsifié lorsqu'un accès au fichier est détecté, où la détermination est exécutée en utilisant une valeur de hachage du fichier indiqué par les informations de collationnement ainsi qu'une valeur de hachage du fichier auquel un accès a été fait.

6. Programme de création d'informations de vérification qui amène un ordinateur à exécuter les étapes suivantes :

acquérir un chemin de fichier d'un fichier à vérifier en utilisant une valeur de hachage pendant une vérification du fichier parmi les fichiers contenus dans un progiciel en exécutant une commande prédéterminée pour le progiciel ;
créer des informations de vérification utilisées pour vérifier un logiciel dans le progiciel, les informations de vérification incluant le chemin de fichier acquis ainsi que la valeur de hachage du fichier ; et
créer des informations de collationnement en effaçant les informations relatives à un fichier logiciel qui n'est pas installé lui-même parmi les informations relatives à des fichiers indiqués par les informations de vérification, et déterminer si un fichier sur un chemin de fichier indiqué par les informations de collationnement a été falsifié lorsqu'un accès au fichier est détecté, où la détermination est exécutée en utilisant une valeur de hachage du fichier indiquée par les informations de collationnement ainsi qu'une valeur de hachage du fichier auquel un accès a été fait.

## Fig. 1

VERIFICATION INFORMATION CREATION SYSTEM

## Fig. 2

| PACKAGE NAME | VERIFICATION INFORMATION ID | FILE PATH/DIRECTORY PATH INFORMATION | HASH VALUE | ESSENTIALITY ATTRIBUTE | CONFIGURATION CHECK REQUIREMENT ATTRIBUTE | ACCESS SOURCE PERMISSION LIST | ... |
|---|---|---|---|---|---|---|---|
| httpd-2.4.6 | 0001 | /usr/sbin/httpd | 1bf80449.... | YES | YES | - | |
| httpd-2.4.6 | 0001 | /etc/httpd/conf/httpd.conf | - | YES | YES | /usr/sbin/httpd | |
| tomcat-9.0.4 | 0003 | /opt/tomcat | dag32245... | NO | NO | - | |
| clamav-0.100 | 0002 | /usr/share/clamav/clamd-gen | 4cd40878... | NO | NO | - | |
| ... | | | | | | | |

## Fig. 3

| PACKAGE NAME | PACKAGE ID | FILE PATH/DIRECTORY PATH INFORMATION | HASH VALUE | ESSENTIALITY ATTRIBUTE | CONFIGURATION CHECK REQUIREMENT ATTRIBUTE | ACCESS SOURCE PERMISSION LIST | USER SIGNATURE | USER-SIGNED PUBLIC-KEY CERTIFICATE | ... |
|---|---|---|---|---|---|---|---|---|---|
| httpd-2.4.6 | httpd-2.4.6.0001. storedevice_id | /usr/sbin/ httpd | 1bf80449.... | YES | YES | – | M3zDGEX7... | MIICsDCC... | |
| httpd-2.4.6 | httpd-2.4.6.0001. storedevice_id | /etc/httpd/conf/ httpd.conf | – | YES | YES | /usr/sbin/ httpd | eLX/hu+i... | AZgCAQAw... | |
| tomcat-9.0.4 | tomcat-9.0.4.0003. storedevice_id | /opt/tomcat | dag32245... | NO | NO | – | 7SNw1s+8... | 6AqCs2Jb... | |
| clamav-0.100 | clamav-0.100.0002. storedevice_id | /usr/share/clamav/ clamd-gen | 4cd40878... | NO | NO | – | Q/b8FxGT... | azELMAkG... | |
| ... | | | | | | | | | |

# Fig. 4

VERIFICATION INFORMATION APPARATUS

START

S1
ACQUIRE SOFTWARE PACKAGE

S2
CONDUCT ANALYSIS

S3
CREATE VERIFICATION INFORMATION

S4
IS ANY MODIFICATION OF VERIFICATION INFORMATION ENTERED?  No

Yes  S5
MODIFY VERIFICATION INFORMATION

S6
ADD SIGNATURE TO VERIFICATION INFORMATION

END

15

# Fig. 5

```
                    ┌──────────────┐
                    │    START     │
                    └──────┬───────┘
                           │
                           ▼
                      ╱─────────╲  S11
                    ╱ DOES PATH OF ╲
                   ╱ ACCESSED FILE MATCH ╲    No
                  ╱ PATH REGISTERED IN    ╲──────────┐
                   ╲    COLLATION        ╱           │
                    ╲  INFORMATION?     ╱            │
                      ╲───────────────╱              │
                           │ Yes                     │
                           ▼                         │
                      ╱─────────╲  S12               │
                    ╱ DOES HASH VALUE EXIST IN ╲  No  │
                   ╱ APPROPRIATE PATH IN COLLATION ╲──┤
                    ╲    INFORMATION?            ╱    │
                      ╲───────────────────────╱      │
                           │ Yes                     │
                           │              ┌──────────▼──────────┐  S16
                           │              │   NOT PROTECTED     │
                           ▼              └──────────┬──────────┘
                      ╱─────────╲  S13               │
                    ╱ DOES HASH VALUE OF ╲    Yes     │
                   ╱ ACCESSED FILE MATCH HASH ╲───┐   │
                  ╱ VALUE OF APPROPRIATE       ╲  │   │
                   ╲  PATH IN COLLATION        ╱  │   │
                    ╲  INFORMATION?           ╱   │   │
                      ╲───────────────────╱      ▼   │
                           │ No  S14    ┌─────────────────────┐ S15
                           ▼            │ GIVE GOOD INTEGRITY │
            ┌──────────────────────────┐│ DETERMINATION RESULT│
            │ GIVE BAD INTEGRITY       │└──────────┬──────────┘
            │ DETERMINATION RESULT BECAUSE│        │
            │ FILE HAS BEEN FALSIFIED  │           │
            └────────────┬─────────────┘           │
                         │◄───────────────────────┘
                         ▼  S17
            ┌──────────────────────────┐
            │  OUTPUT RESULT TO LOG    │
            └────────────┬─────────────┘
                         ▼
                  ┌──────────────┐
                  │     END      │
                  └──────────────┘
```

# Fig. 6

```
                    ┌──────────────┐
                    │    START     │
                    └──────┬───────┘
                           │
                           ▼
                  ╱────────────────╲  S21
                 ╱  IS ACCESSED FILE ╲    No
                ╱   MARKED FOR        ╲────────────────────┐
                ╲   CONFIGURATION     ╱                     │
                 ╲  CHECKING?        ╱                      │
                  ╲────────┬────────╱                       │
                        Yes │                               │
                           ▼                                │
              ╱──────────────────────╲  S22                 │
             ╱  DOES PATH OF ACCESSED  ╲    No               │
            ╱   FILE EXIST UNDER DIRECTORY╲──────────┐       │
            ╲   REGISTERED IN COLLATION   ╱          │       │
             ╲  INFORMATION?             ╱           │       │
              ╲────────┬────────────────╱            ▼       ▼
                    Yes │                      ┌──────────────────┐ S26
                       ▼                       │  NOT PROTECTED   │
         ╱──────────────────────────╲ S23      └────────┬─────────┘
        ╱  DOES PATH OF ACCESSED FILE ╲   Yes            │
       ╱   MATCH FILE NAME OR DIRECTORY ╲────────┐       │
       ╲   NAME UNDER DIRECTORY MARKED   ╱        ▼       │
        ╲  FOR CONFIGURATION CHECKING IN ╱  ┌──────────────────┐ S25
         ╲ COLLATION INFORMATION?       ╱   │ GIVE GOOD INTEGRITY│
          ╲──────────┬─────────────────╱    │ DETERMINATION RESULT│
                 No  │  S24                  └────────┬─────────┘
                    ▼                                 │
      ┌──────────────────────────┐                    │
      │  GIVE BAD INTEGRITY        │                   │
      │  DETERMINATION RESULT      │                   │
      │  BECAUSE UNINTENDED FILE HAS│◄─────────────────┘
      │  BEEN ADDED                │
      └──────────┬─────────────────┘
                 │  S27
                ▼
      ┌──────────────────────────┐
      │  OUTPUT RESULT TO LOG      │
      └──────────┬─────────────────┘
                 │
                ▼
          ┌──────────────┐
          │     END      │
          └──────────────┘
```

# Fig. 7

```
                        ┌─────────────┐
                        │    START    │
                        └──────┬──────┘
                               │
                               ▼
                         ╱─────────────╲   ⌐S31
                        ╱ IS ACCESSED   ╲
                       ╱   FILE MARKED   ╲      No
                       ╲ FOR CONFIGURATION╱──────────────────┐
                        ╲   CHECKING?    ╱                    │
                         ╲──────┬───────╱                     ▼
                               │ Yes                  ⌐S35
                               │                 ┌──────────────────────────┐
                               ▼                 │      NOT PROTECTED        │
                         ╱─────────────╲  ⌐S32   └────────────┬─────────────┘
                        ╱ IS ACCESSED   ╲                     │
                       ╱ FILE LOCATED    ╲     Yes            │
                      ╱ UNDER DIRECTORY   ╲──────────┐        │
                      ╲ REGISTERED IN     ╱          │        │
                       ╲COLLATION INFORM.╱           ▼   ⌐S34 │
                        ╲──────┬───────╱    ┌──────────────────────┐  │
                               │ No  ⌐S33   │ GIVE GOOD INTEGRITY  │  │
                               │            │ DETERMINATION RESULT │  │
                               ▼            └──────────┬───────────┘  │
       ┌──────────────────────────────┐               │              │
       │ GIVE BAD INTEGRITY DETERMIN. │               │              │
       │ RESULT BECAUSE FILE HAS BEEN │               │              │
       │           DELETED            │               │              │
       └──────────────┬───────────────┘               │              │
                      │◄─────────────────────────────┘◄─────────────┘
                      │         ⌐S36
                      ▼
       ┌──────────────────────────────┐
       │    OUTPUT RESULT TO LOG       │
       └──────────────┬───────────────┘
                      ▼
              ┌─────────────┐
              │     END     │
              └─────────────┘
```

# Fig. 8

START

S41 — DOES PATH OF ACCESSED FILE MATCH PATH REGISTERED IN COLLATION INFORMATION?

No → 

Yes ↓

S42 — IS ACCESS SOURCE PERMISSION LIST SET ON APPROPRIATE PATH IN COLLATION INFORMATION?

No →

Yes ↓

S48 — NOT PROTECTED

S43 — DOES ACCESS SOURCE PROCESS PATH OF ACCESSED FILE MATCH PATH PUT ON ACCESS SOURCE PERMISSION LIST FOR APPROPRIATE PATH IN COLLATION INFORMATION?

Yes →

No ↓

S44 — DOES HASH VALUE OF ACCESS SOURCE PROCESS OF ACCESSED FILE CHECK OK?

Yes →

No ↓

S47 — GIVE BAD INTEGRITY DETERMINATION RESULT BECAUSE ACCESS SOURCE IS NOT PERMITTED

S45 — GIVE BAD INTEGRITY DETERMINATION RESULT BECAUSE FILE HAS BEEN FALSIFIED

S46 — GIVE GOOD INTEGRITY DETERMINATION RESULT

S49 — OUTPUT RESULT TO LOG

END

# Fig. 9

## Fig. 10

| PACKAGE NAME | PACKAGE ID | VERIFICATION INFORMATION ID | FILE PATH/DIRECTORY PATH INFORMATION | HASH VALUE | CONFIGURATION CHECK REQUIREMENT ATTRIBUTE | ACCESS SOURCE PERMISSION LIST | ... |
|---|---|---|---|---|---|---|---|
| httpd−2.4.6 | httpd−2.4.6.0001. storedevice_id | verif0001 | /usr/sbin/httpd | 1bf80449.... | YES | − | |
| httpd−2.4.6 | httpd−2.4.6.0001. storedevice_id | verif0001 | /etc/httpd/conf/httpd.conf | − | YES | /usr/sbin/httpd | |
| tomcat−9.0.4 | tomcat−9.0.4.0003. storedevice_id | verif0001 | /opt/tomcat | dag32245... | NO | − | |
| ... | | | | | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019008738 A
- JP 2019008377 A
- US 2010062844 A1
- JP 2019008376 A
- EP 3855334 A1

**Non-patent literature cited in the description**

- *Tripwire,* 11 July 2019, https://www.trip-wire.co.jp/about
- **NIKKEI XTECH.** *Intel TXT Enhances Security in Virtual Environments,* 11 July 2019, https://tech.nikkeibp.co.jp/it/article/COLUMN/20071114/28 7197